# EUROPEAN PATENT APPLICATION

(11) **EP 4 506 405 A1**
(43) Date of publication of application: **12.02.2025**
(21) Application number: 22933579.9
(22) Date of filing: 03.08.2022
(51) Int. Cl.: C08L 21/00, C08G 18/65, C08K 3/013, C08K 5/05, C08K 5/29

(54) **THERMALLY-CONDUCTIVE POLYMER COMPOSITION, THERMALLY-CONDUCTIVE POLYMER COMPOSITION-FORMING MATERIAL, THERMALLY-CONDUCTIVE POLYMER, AND PRODUCTION METHOD FOR THERMALLY-CONDUCTIVE POLYMER COMPOSITION**

(30) Priority: 24.03.2022 JP 2022048892
(71) Applicant: Mitsubishi Materials Corporation, Tokyo 100-8117 (JP)
(72) Inventor: IIDA Shintaro, Amagasaki-shi, Hyogo 660-0856 (JP); ASHIDA Keiko, Amagasaki-shi, Hyogo 660-0856 (JP)
(74) Representative: Hoffmann Eitle
(86) International application number: PCT/JP2022/029741
(87) International publication number: WO 2023/181446

(57) **Abstract**

The thermally conductive polymer composition includes: a liquid rubber having two or more hydroxyl groups in one molecule; a plasticizer having one or more hydroxyl groups in one molecule and miscible with the liquid rubber; a tackifier miscible with the plasticizer; and a curing agent having two or more functional groups in one molecule that can react with both the hydroxyl groups of the liquid rubber and the hydroxyl groups of the plasticizer, wherein the tackifier is dispersed in the plasticizer such that the plasticizer is free of a tackifier particle having a circular equivalent diameter of 10 µm or more.

## Description

### TECHNICAL FIELD

The present invention relates to a thermally conductive polymer composition, a material for forming the thermally conductive polymer composition, a thermally conductive polymer, and a method for producing the thermally conductive polymer composition.

Priority is claimed on Japanese Patent Application No. 2022-048892, filed March 24, 2022, the content of which is incorporated herein by reference.

### BACKGROUND ART

Heat transfer materials that are provided between a heat generating body and a heat dissipating member and transmit heat are known in various forms, such as grease type, gap filler type, and sheet type. By using these heat transfer materials, for example, heat generated by a heat generating body can be efficiently dissipated from a heat dissipating member such as a metal case or a heat sink. By providing such a heat transfer material between a heat generating body and a heat dissipating member, the thermal resistance between the heat generating body and the heat dissipating member can be reduced.

In recent years, as various electronic devices have become more highly integrated and perform better, there is a demand for structures with improved heat dissipation properties so that the heat generated by the operation of components (heat generating elements) can be efficiently dissipated to the outside. For this reason, there is a demand for heat transfer materials that can further reduce the thermal resistance between the heating element and the heat dissipating member.

**In** order to reduce the thermal resistance between the heat generating element and the heat dissipation member, a configuration is known in which a heat transfer material using a material with high thermal conductivity is provided between the heat generating element and the heat dissipation member (see, for example, Patent Document 1).

On the other hand, it is also possible to increase the adhesion of the heat transfer material provided between the heat generating body and the heat dissipating member, thereby reducing the thermal resistance (interface thermal resistance) occurring at the interface between them.

If the adhesion between the heat generating body and the heat dissipating member is insufficient, the interfacial thermal resistance between the heat generating body and the heat dissipating member increases, and the heat dissipation performance may decrease. Therefore, it is conceivable to improve the adhesion between the heat generating body and the heat dissipating member by subjecting the heat dissipating member to a surface treatment that enhances the adhesion.

### Citation List

### Patent Documents

Patent Document 1: Japanese Unexamined Patent Application, First Publication No. 2020-157554 A

### SUMMARY OF INVENTION

### Technical Problem

However, when performing surface treatment to improve adhesion to the surface of a heat dissipating member, there are problems such as an increase in the number of steps required for the treatment and an associated increase in manufacturing costs. In addition, although it is possible to add a tackifier to a heat transfer material to improve adhesion between the heat generating body and the heat dissipating member, simply adding a tackifier to a heat transfer material may not stably exhibit the effect of improving adhesion due to uneven distribution of the tackifier, or the effect of improving adhesion may not be exhibited at all.

The present invention has been made in view of the above background, and aims to provide a thermally conductive polymer composition having high adhesion, low viscosity, high shape conformity, and high workability without the need to remove the solvent during curing, a material for forming the thermally conductive polymer composition, and a thermally conductive polymer obtained therefrom, and a method for producing the thermally conductive polymer composition. Shape conformity refers to the property of being able to deform along the shape of the adhesive surface and bond without gaps.

### Solution to Problem

In order to achieve the above object, the present invention is configured as follows.

An aspect of the present invention is a thermally conductive polymer composition including: a liquid rubber having two or more hydroxyl groups in one molecule; a plasticizer having one or more hydroxyl groups in one molecule and miscible with the liquid rubber; a tackifier miscible with the plasticizer; and a curing agent having two or more functional groups capable of reacting with both the hydroxyl groups of the liquid rubber and the hydroxyl groups of the plasticizer in one molecule, wherein the tackifier is dispersed in the plasticizer such that the plasticizer is free of a tackifier particle having a circular equivalent diameter of 10 µm or more.

According to the thermally conductive polymer of the present invention, the hydroxyl groups, which are the terminal group of the liquid rubber, and the hydroxyl groups, which are the terminal group of the plasticizer, are each chemically bonded to the functional groups in the curing agent by polymerization reaction, and the cured thermally conductive polymer is cured, and the plasticizer components are incorporated as a constituent material. As a result, the hardness is kept low by the plasticizer components. And, by dispersing the tackifier in the plasticizer, the adhesion of the thermally conductive polymer composition in a high temperature environment is improved, and the thermal conductivity between the heating body and the heat dissipation member can be increased. Here, the state in which "the tackifier is dispersed in the plasticizer" is defined as a state in which there are no particles of the tackifier with a diameter of 10 µm or more in terms of a circle when the thermally conductive polymer composition is observed under magnification.

In addition, the term "miscible" refers to a substance that, when mixed alone, does not separate into two phases but is mixed. In addition, a solvent that is miscible with the liquid rubber may be used as the plasticizer.

In the thermally conductive polymer composition according to the present invention, the tackifier may include one or more of a hydrocarbon resin, a terpene resin, a rosin resin, a styrene resin, an alkylphenol resin, a xylene resin, and a coumarone-indene resin.

In the thermally conductive polymer composition according to the present invention, the tackifier may be dispersed in an amount of 10 parts by mass or more and 70 parts by mass or less relative to 100 parts by mass of the plasticizer.

In the present invention, the liquid rubber may include at least one of polybutadiene, polyisoprene, and polyolefin, terminal groups thereof being hydroxyl terminal groups.

In the thermally conductive polymer composition according to the present invention, the plasticizer may include at least one of ethylene glycol, n-butyl carbitol, glycerin, polyethylene glycol monomethyl ether, butyl glycol, propyl glycol, ethyl glycol, and methyl tetraglycol.

In the thermally conductive polymer composition according to the present invention, the curing agent may be an isocyanate compound.

The thermally conductive polymer composition according to the present invention further includes a filler having thermal conductivity.

Other aspect of the present invention is a material for forming the thermally conductive polymer composition according to any one of above-described aspects, including: a liquid A containing the plasticizer in which the liquid rubber and the tackifier are dispersed; and a liquid B containing the curing agent.

Other aspect of the present invention is a thermally conductive polymer obtained by curing the thermally conductive polymer composition according to any one above-described aspects, wherein a terminal group of the thermally conductive polymer is - [(C₂H₄-O)ₘ₋CnH₂ₙ₊₁], m and n being any natural number.

Other aspect of the present invention is a method for producing the thermally conductive polymer composition according to any one of above-described aspects, the method including at least: a dispersing step of dispersing the tackifier in the plasticizer such that the plasticizer is free of a tackifier particle having a circular equivalent diameter of 10 µm or more; and a dissolving step of dissolving the liquid rubber in the plasticizer having the tackifier dispersed therein.

### Advantageous Effects of Invention

According to the present invention, it is possible to provide a thermally conductive polymer composition having high adhesion, low viscosity, high shape conformity, and high workability without the need to remove the solvent during curing, a material for forming the thermally conductive polymer composition, and a thermally conductive polymer obtained therefrom, and a method for producing the thermally conductive polymer composition.

### BRIEF DESCRIPTION OF DRAWINGS

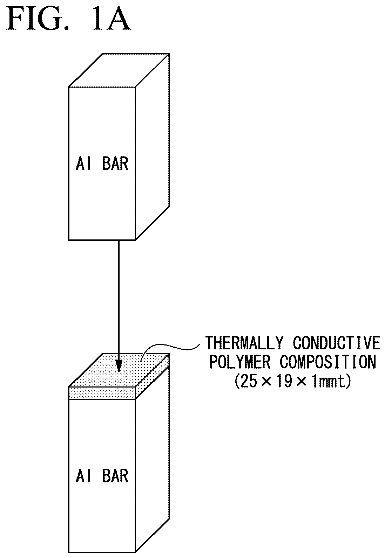

FIG. 1A is a perspective view showing details of a tensile test in a verification example.

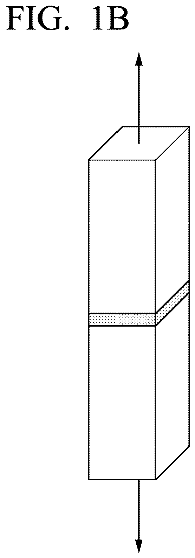

FIG. 1B is a perspective view showing details of a tensile test in a verification example.

### DESCRIPTION OF EMBODIMENTS

Hereinafter, a thermally conductive polymer composition according to one embodiment of the present invention, a material for forming the thermally conductive polymer composition, a thermally conductive polymer obtained therefrom, and a method for producing the thermally conductive polymer composition will be described with reference to the drawings. Note that each embodiment shown below is specifically described to allow a better understanding of the gist of the invention, and does not limit the present invention unless otherwise specified.

### (Thermal Conductive Polymer Composition)

The thermally conductive polymer composition of this embodiment contains a liquid rubber, a plasticizer miscible with the liquid rubber, a tackifier pre-dispersed in the plasticizer, and a curing agent. The thermally conductive polymer composition of this embodiment is in a state before curing (polymerization reaction). The plasticizer in this embodiment may be a solvent miscible with the liquid rubber.

The liquid rubber may be, for example, a liquid rubber that has fluidity at room temperature and has two or more hydroxyl groups (-OH) in one molecule as terminal groups in its composition formula. Some of the hydroxyl groups that become terminal groups in such liquid rubber react with functional groups of the curing agent and form chemical bonds when the thermally conductive polymer composition described below is cured.

Specific examples of liquid rubber having two or more hydroxyl groups in one molecule as terminal groups include polybutadiene having hydroxyl groups as terminal groups, polyisoprene having hydroxyl groups as terminal groups, polyolefin having hydroxyl groups as terminal groups, etc. Among these, polybutadiene having hydroxyl groups as terminal groups is preferred in terms of good filling properties of fillers.

The molecular weight of the liquid rubber is not particularly limited, but may be, for example, in the range of 1000 to 3000, and more preferably in the range of 1500 to 3000. The hydroxyl value of the liquid rubber is preferably in the range of 0.5 to 2.0, and more preferably in the range of 0.5 to 1.8. The viscosity of the liquid rubber is not particularly limited, but may be, for example, in the range of 1.0 Pa·s to 1000 Pa·s, and more preferably in the range of 1.0 Pa·s to 900 Pa·s.

The plasticizer is a compound that improves the plasticity of the thermally conductive polymer composition, is miscible with the liquid rubber, and has one or more hydroxyl groups (-OH) as terminal groups in one molecule in the composition formula.

The hydroxyl groups which are the terminal groups of such plasticizers react with the functional groups of the curing agent to form chemical bonds when the thermally conductive polymer composition described below is cured.

Specific examples of plasticizers having one or more hydroxyl groups at the terminal groups in one molecule include ethylene glycol, n-butyl carbitol (diethylene glycol monobutyl ether), glycerin, polyethylene glycol monomethyl ether, butyl glycol, propyl glycol, ethyl glycol, and methyl tetraglycol.

The plasticizer contained in conventional thermally conductive polymer compositions is cured by volatilizing and removing the plasticizer, so the cured thermally conductive polymer contains almost no plasticizer components. On the other hand, the plasticizer contained in the thermally conductive polymer composition of this embodiment forms a chemical bond with the liquid rubber by the curing agent during curing, and becomes part of the thermally conductive polymer. In other words, the thermally conductive polymer has a plasticizer-curing agent-liquid rubber bond.

Note that the curing agent also bonds with other plasticizers and with other liquid polymers, so there are also plasticizer-curing agent-plasticizer and liquid rubber-curing agent-liquid rubber bonds. Furthermore, if the curing agent is of a multifunctional type, it is more desirable since it will have many bonds between the plasticizer and the liquid polymer via the curing agent.

For the reasons mentioned above, it is not necessary to use a highly volatile low-boiling plasticizer, and plasticizers with a wide range of boiling points, from low-boiling to high-boiling plasticizers, can be used according to the application. In particular, from the viewpoint of ease of application of the thermally conductive polymer composition, a medium-boiling solvent or a high-boiling solvent is preferred. Specifically, the boiling point of the plasticizer is preferably 100°C or higher, more preferably 150°C or higher, and even more preferably 180°C or higher.

The appropriate content ratio of the plasticizer to the liquid rubber may be, for example, in the range of 50 parts by mass to 600 parts by mass to 100 parts by mass of the liquid rubber. By setting the content ratio of the plasticizer to the liquid rubber in this range, the liquidity is ensured during application of the thermally conductive polymer composition, workability is improved, and the curing of the liquid rubber component can be prevented from being inhibited.

The appropriate ratio of the plasticizer to the liquid rubber is desirably in the range of 100 parts by mass or more and 200 parts by mass or less per 100 parts by mass of the liquid rubber.

The tackifier is a material that is dispersed in the plasticizer and improves the adhesion of the thermally conductive polymer composition. The tackifier is selected from materials that are miscible with the plasticizer and is dispersed in the plasticizer in advance.

The state in which the tackifier is dispersed in the plasticizer referred to here can be identified by forming the thermally conductive polymer composition of this embodiment into a sheet, observing the sheet surface in 10 fields of view at a magnification of 2000 times using a microscope, and observing a state in which no tackifier particles (foreign matter) having a diameter of 10 µm or more in terms of a circle are observed in any of the fields of view.

It is more preferable that no tackifier particles having a diameter of 5 µm or more, calculated as a circle, are observed in any field of view, and it is even more preferable that no tackifier particles having a diameter of 1 µm or more are observed.

When the particles of the tackifier have a diameter of 10 µm or less, the tackifier is more effective and improves the adhesion of the thermally conductive polymer composition and the thermally conductive polymer to the bonding surface.

The mass ratio of the tackifier to the plasticizer may be in the range of 10 parts by mass or more and 70 parts by mass or less, preferably 20 parts by mass or more and 60 parts by mass or less, relative to 100 parts by mass of the plasticizer. When the tackifier is 10 parts by mass or more, the adhesion of the thermally conductive polymer composition can be improved. When the tackifier is 70 parts by mass or less, the liquidity of the thermally conductive polymer composition during application can be ensured.

Examples of the tackifier include hydrocarbon resins, terpene resins, rosin resins, styrene resins, alkylphenol resins, xylene resins, and coumarone-indene resins. From the viewpoint of adhesion, it is preferable to use terpene resins, rosin resins, and styrene resins. Furthermore, terpene resins and rosin resins are particularly preferable. These tackifiers may be used alone or in combination of two or more kinds.

From the viewpoint of ensuring high-temperature adhesion, the softening point of the tackifier may be, for example, 0°C or higher and 200°C or lower, preferably 40°C or higher and 180°C or lower.

Specific examples of the tackifier include hydrocarbon resins such as Quinton 100 series (manufactured by Zeon Corporation, product name), Alcon M series, Alcon P series (manufactured by Arakawa Chemical Industries, Ltd., product name), and Imave series (manufactured by Idemitsu Kosan Co., Ltd., product name). Other examples include terpene resins such as Clearon series, YS Polystar series, YS Resin series (all manufactured by Yasuhara Chemical Industries, Ltd., product name), and Tamanol 901 (manufactured by Arakawa Chemical Industries, Ltd., product name). Other examples include rosin resins such as Pine Crystal KE-100, Pine Crystal KE-311, Pine Crystal KE-359, Pine Crystal KE-604, Pine Crystal D-6250, Pencel D125, Pencel D160, Ester Gum H series, and Ester Gum HP series (all manufactured by Arakawa Chemical Industries, Ltd., product name). Other examples include styrene resins such as YS Resin SX100 (manufactured by Yasuhara Chemical Industries, Ltd., product name). Other examples include alkylphenol resins such as Tamanol 521 (product name, manufactured by Arakawa Chemical Industries, Ltd.), xylene resins such as Nikanol L (product name, manufactured by Fudow Co., Ltd.), and coumarone-indene resins such as Coumarone V-120S (product name, manufactured by Nippon Paint Chemical Co., Ltd.).

The curing agent may have two or more functional groups in one molecule that can react with both the hydroxyl groups of the liquid rubber and the hydroxyl groups of the plasticizer. The curing agent of the present embodiment may be one that chemically bonds with both the hydroxyl groups of the liquid rubber and the hydroxyl groups of the plasticizer.

Specific examples of curing agents that have two or more functional groups in one molecule that react with hydroxyl groups include isocyanate compounds, acid anhydrides, carboxylic acids, and amines.

The method of curing the thermally conductive polymer composition using such curing agents is not particularly limited, but examples include a curing method in which the polymerization reaction proceeds when left at room temperature, and a method in which the reaction rate is increased by heating to promote curing.

The appropriate content ratio of the curing agent to the liquid rubber may be, for example, in the range of 50 parts by mass to 400 parts by mass to 100 parts by mass of the liquid rubber. By setting the content ratio of the curing agent to the liquid rubber in this range, the hydroxyl groups of the liquid rubber and the hydroxyl groups of the plasticizer can be sufficiently polymerized to form a thermally conductive polymer with an appropriate hardness, and it is possible to prevent the hardness from becoming excessive and increasing brittleness.

The content of the curing agent in the liquid rubber is preferably 50 parts by mass or more and 360 parts by mass or less, and more preferably 90 parts by mass or more and 200 parts by mass or less, per 100 parts by mass of the liquid rubber.

When a filler is mixed, for example, a metal, a metal oxide, a metal hydroxide, a metal nitride, carbon, and the like can be used. Examples of the metal include gold, silver, copper, aluminum, tungsten, titanium, nickel, iron, and alloys using two or more of these metals.

Examples of metal oxide fillers include aluminum oxide, magnesium oxide, beryllium oxide, zinc oxide, silicon oxide, and titanium oxide. Examples of metal hydroxides include aluminum hydroxide. Examples of metal nitride fillers include aluminum nitride, boron nitride, and silicon nitride. Examples of carbon fillers include graphite, carbon fiber, fullerene, graphene, and carbon nanotubes. Among these, aluminum oxide is particularly preferred as a filler constituent material because it is inexpensive and easily available.

The filler preferably contains one or more of the example materials described above, more preferably contains one or more of metal oxides, metal hydroxides, and metal nitrides, and particularly preferably contains aluminum oxide.

The shape of the filler may be particulate, and from the viewpoint of imparting excellent shape conformity and high thermal conductivity after curing to the thermally conductive elastomer composition, it is preferable to use spherical particles, disk-shaped particles, or rounded particles with few corners (rounded particles).

The particle size distribution of the filler may have multiple peaks from the viewpoint of ensuring both filling property and processability. Therefore, the filler may contain multiple types of filler particles with different average particle diameters (d50). When the filler contains two types of filler particles with different average particle diameters (d50), it is preferable that the peak on the small particle side is in the range of 0.3 µm to 10 µm, and the peak on the large particle side is in the range of 20 µm to 100 µm, for example.

The thermally conductive polymer composition of the present embodiment contains the above-mentioned liquid rubber, plasticizer, tackifier, curing agent, and filler as necessary, and may further contain lubricants, antioxidants, flame retardants, etc. For example, by further adding a flame retardant, the composition can be used as a flame-retardant heat transfer member between a battery cell and an exterior case (heat sink) of a lithium-ion secondary battery.

According to the thermally conductive polymer composition of the present embodiment, the hydroxyl groups of the terminal groups of the liquid rubber and the hydroxyl groups of the terminal groups of the plasticizer are each chemically bonded to the functional groups in the curing agent through a polymerization reaction, and the cured thermally conductive polymer is cured, whereby the plasticizer component is incorporated as a constituent material. As a result, the hardness is kept low by the plasticizer component incorporated as a constituent material in the thermally conductive polymer. Furthermore, by using a plasticizer in which a tackifier is dispersed, it is possible to realize a thermally conductive polymer composition that improves adhesion in high temperature environments and has high thermal conductivity.

### (Material for forming thermal conductive polymer composition)

The material for forming thermally conductive polymer composition of this embodiment is a two-liquid mixed type thermally conductive polymer material for forming the above-mentioned thermally conductive polymer composition, and has a liquid A containing a plasticizer having the above-mentioned liquid rubber and a tackifier dispersed therein, and a liquid B containing a curing agent. At least one or both of the liquid A and the liquid B may further contain a filler.

As long as the amount of filler filled in the liquid A and liquid B is up to 2000 parts by mass, the specific gravity of both is kept at about 3g/cm³.

When the material for forming thermally conductive polymer composition of this embodiment is used, it is cured by mixing the liquid A and the liquid B, whereby the hydroxyl groups of the liquid rubber in the liquid A and the hydroxyl groups of the plasticizer come into contact with the curing agent contained in the liquid B and chemically bond to each other. As an application method, for example, a method can be used in which equal volumes of the liquid A and the liquid B are dispensed using a dispenser for mixing two liquids, and then mixed to form a thermally conductive polymer composition, which can then be directly applied to the surface of a member on which the thermally conductive polymer is to be provided.

In this manner, according to the material for forming thermally conductive polymer composition of the present embodiment, by separating the liquid A containing the plasticizer having dispersed therein the liquid rubber and the tackifier, and the liquid B containing the curing agent, these can be cured at any desired time to form the thermally conductive polymer, and a material for forming thermally conductive polymer composition with excellent storage stability can be realized.

### (Thermal Conductive Polymer)

The thermally conductive polymer of this embodiment can be obtained by curing the above-mentioned thermally conductive polymer composition. Such a thermally conductive polymer has, for example, a terminal group of -[(C₂H₄-O)ₘ-CₙH2ₙ₊₁].

The thermally conductive polymer obtained by curing the thermally conductive polymer composition has improved adhesion to components, for example, by suppressing cohesive failure due to polymerization of liquid rubber through urethane bonds. The thermal conductivity of such a thermally conductive polymer measured by a steady-state method is, for example, in the range of 1 W/(m·K) or more and 5 W/(m·K) or less.

### (Method of producing thermally conductive polymer composition)

When producing a thermally conductive polymer composition according to one embodiment of the present invention, the tackifier is first dissolved and dispersed in the plasticizer (dispersion step). In this dispersion step, the tackifier is added to the plasticizer and stirred until the thermally conductive polymer composition produced does not contain any tackifier particles with a diameter of 10 µm or more in terms of a circle. This makes it possible to obtain a plasticizer in which the tackifier is dispersed. The dispersion referred to here means a state in which the obtained thermally conductive polymer composition is observed in 10 fields of view at a magnification of 2000 times using a microscope, and no tackifier particles (foreign matter) with a diameter of 10 µm or more in terms of a circle are observed in any of the fields of view. The temperature during dispersion of the tackifier is not limited, but is preferably 10°C to 100°C, for example.

Next, the liquid rubber is added to the plasticizer with the tackifier dispersed therein, and further a filler is added as necessary, and these are kneaded in a degassing mixer to prepare the liquid A (dissolving step). Furthermore, a flame retardant and a filler are added to the curing agent as necessary, and the mixture is kneaded in a degassing mixer to prepare the liquid B.

Then, equal volumes of the liquid A and the liquid B are simultaneously discharged and mixed, whereby the thermally conductive polymer composition of this embodiment can be produced.

Although one embodiment of the present invention has been described above, this embodiment is presented as an example and is not intended to limit the scope of the invention. This embodiment can be implemented in various other forms, and various omissions, substitutions, and modifications can be made without departing from the gist of the invention. This embodiment and its modifications are included in the scope of the invention and its equivalents described in the claims, as well as in the scope and gist of the invention.

### Examples

Below, the A liquid and the B liquid of the material for forming thermally conductive polymer composition of Examples (Ex.) 1 to 9 of the present invention and Comparative Examples (C.Ex.) 1 to 3 prepared as samples were mixed in equal volumes at room temperature to form a thermally conductive polymer composition, which was then cured to obtain a thermally conductive polymer. The specific gravity of the liquid A and the liquid B was almost constant at about 3g/cm³ with almost no difference due to the composition. Then, for each thermally conductive polymer, the presence or absence of tackifier particles with a circular conversion of 10 µm or more, and the maximum stress in the tensile test were examined. In addition, foreign matter (tackifier particles) was visually confirmed in the liquid A of each Example and Comparative Example.

In the tensile test, as shown in Figure 1A, two aluminum rods were prepared, and the thermally conductive polymer composition of each sample was formed into a rectangle of length 25 mm x width 19 mm x thickness 1 mm on one aluminum rod, and the other aluminum rod was layered and joined to this. Then, using a tensile tester (product name: AGS-X, manufactured by Shimadzu Corporation), the samples were pulled from above and below as shown in Figure 1B to measure the adhesive strength and elongation, and the maximum stress of each sample was calculated based on the results. Note that the test environment was set to 50°C in order to evaluate adhesion in a high-temperature environment.

The compositions of the liquid A and the liquid B and the thermal conductivity of the obtained thermally conductive polymers are summarized in Table 1 (Examples 1 to 9 of the present invention, Comparative Examples 1 to 3). Note that no tackifier was added in Comparative Example 1, and no liquid rubber was added in Comparative Example 2. In Comparative Example 3, the tackifier was added after mixing the plasticizer with the liquid rubber, and the tackifier was not dispersed in the plasticizer.

The details of each component are as follows:

### [Liquid rubber]

Hydroxyl-terminated polybutadiene: Poly bd (registered trademark) series (Idemitsu Kosan Co., Ltd.) [Plasticizer]
n-Butyl carbitol: (manufactured by Tokyo Chemical Industry Co., Ltd.)

### [Filler]

3 Dispersion particle size alumina: DAB series (product name, manufactured by Denka Co., Ltd.)

### [Curing agent (crosslinking agent)]

Multifunctional isocyanate: Millionate MR series (product name, manufactured by Tosoh Corporation)

### [Tackifier]

Terpene resin: YS Polystar series (manufactured by Yasuhara Chemical Co., Ltd., product name)

### [Flame retardant]

Phosphorus-based flame retardant (manufactured by TCP Daihachi Chemical Industry Co., Ltd.)

**[Table 1]**

| | | Ex. 1 | Ex. 2 | Ex. 3 | Ex. 4 | Ex. 5 | Ex. 6 | Ex. 7 | Ex. 8 | Ex. 9 | C.Ex. 1 | C.Ex. 2 | C.Ex. 3 |
|---|---|---|---|---|---|---|---|---|---|---|---|---|---|
| Liquid A | Liquid Rubber | 30 | 30 | 30 | 30 | 30 | 20 | 10 | 40 | 40 | 30 | 0 | 30 |
| | Plasticiz er | 60 | 60 | 60 | 60 | 60 | 60 | 60 | 50 | 40 | 70 | 60 | 60 |
| | Filler | 1700 | 1700 | 1700 | 1700 | 1700 | 1700 | 1700 | 1700 | 1700 | 1700 | 1700 | 1700 |
| | Tackifier | 10 | 10 | 10 | 10 | 10 | 10 | 30 | 10 | 20 | 0 | 40 | 10 |
| | Kind of Tackifier | YS Polysta r T160 | YS Polysta r K125 | YS Polysta r G150 | YS Resin cp (liquid ) | YS Polysta r T30 | YS Polysta r T160 | YS Polysta r T160 | YS Polysta r T160 | YS Polysta r T160 | - | YS Polysta r T160 | YS Polysta r T160 |
| Liquid B | Curing Agent | 20 | 20 | 20 | 20 | 20 | 20 | 20 | 20 | 20 | 20 | 20 | 20 |
| | Flame Retardan t | 80 | 80 | 80 | 80 | 80 | 80 | 80 | 80 | 80 | 80 | 80 | 80 |
| | Filler | 900 | 900 | 900 | 900 | 900 | 900 | 900 | 900 | 900 | 900 | 900 | 900 |
| Dispersing Tackifier | | Present | Present | Present | Present | Present | Present | Present | Present | Present | - | Present | Absent |
| Dispersibilit y | Tackifier Particle of 10µm or more | Absent | Absent | Absent | Absent | Absent | Absent | Absent | Absent | Absent | - | Absent | Present |
| | Foreign Matters in Visual Inspection | Absent | Absent | Absent | Absent | Absent | Absent | Absent | Absent | Absent | Absent | Absent | Absent |
| Adhesion | Maximu m Stress in Tensile Test at 50°C | 0.020 | 0.020 | 0.013 | 0.011 | 0.013 | 0.012 | 0.016 | 0.018 | 0.014 | 0.006 | 0.005 | 0.009 |

In Examples 1 to 9, in which the plasticizer with the tackifier dispersed therein was used in the liquid A, the maximum stress in a tensile test at 50°C was at least 0.011 MPa (Example 4) or more, and reached 0.020 MPa in Examples 1 and 2. Furthermore, no tackifier particles having a circular equivalent diameter of 10 µm or more were observed, and no foreign matter was visually observed in the liquid A.

On the other hand, in Comparative Example 1, since no tackifier was added to the plasticizer, the maximum stress in the tensile test was only 0.006 MPa, which is significantly lower than that in Examples 1 to 9. In Comparative Example 2, since no liquid rubber was added to the liquid A, the maximum stress in the tensile test was only 0.005 MPa, which is significantly lower than that in Examples 1 to 9. Furthermore, in Comparative Example 3, although a tackifier was added after mixing the liquid rubber and the plasticizer, a process for dispersing the tackifier in the plasticizer was not performed, so the maximum stress in the tensile test was only 0.009 MPa, which is significantly lower than that in Examples 1 to 9. In Comparative Example 3, tackifier particles having a circular equivalent of 10 µm or more were observed, and foreign matter was also present in the liquid A when viewed with the naked eye.

From the above results, it was confirmed that by adding the tackifier to a plasticizer and using the liquid A in which the tackifier is dispersed in the plasticizer, a thermally conductive polymer composition can be obtained that can form a thermally conductive polymer that has excellent maximum stress and exhibits excellent adhesion.

## Claims

1. A thermally conductive polymer composition comprising:
a liquid rubber having two or more hydroxyl groups in one molecule;
a plasticizer having one or more hydroxyl groups in one molecule and miscible with the liquid rubber;
a tackifier miscible with the plasticizer; and
a curing agent having two or more functional groups capable of reacting with both the hydroxyl groups of the liquid rubber and the hydroxyl groups of the plasticizer in one molecule, wherein
the tackifier is dispersed in the plasticizer such that the plasticizer is free of a tackifier particle having a circular equivalent diameter of 10 µm or more.

2. The thermally conductive polymer composition according to Claim 1, wherein the tackifier comprises one or more of a hydrocarbon resin, a terpene resin, a rosin resin, a styrene resin, an alkylphenol resin, a xylene resin, and a coumarone-indene resin.

3. The thermally conductive polymer composition according to Claim 1 or 2, wherein the tackifier is dispersed in an amount of 10 parts by mass or more and 70 parts by mass or less relative to 100 parts by mass of the plasticizer.

4. The thermally conductive polymer composition according to any one of Claims 1 to 3, wherein the liquid rubber comprises at least one of polybutadiene, polyisoprene, and polyolefin, terminal groups thereof being hydroxyl terminal groups.

5. The thermally conductive polymer composition according to any one of Claims 1 to 4, wherein the plasticizer comprises at least one of ethylene glycol, n-butyl carbitol, glycerin, polyethylene glycol monomethyl ether, butyl glycol, propyl glycol, ethyl glycol, and methyl tetraglycol.

6. The thermally conductive polymer composition according to any one of Claim 1 to 5, wherein the curing agent is an isocyanate compound.

7. The thermally conductive polymer composition according to any one of Claims 1 to 6, further comprising a filler having thermal conductivity.

8. A material for forming the thermally conductive polymer composition according to any one of Claims 1 to 7, comprising:
a liquid A containing the plasticizer in which the liquid rubber and the tackifier are dispersed; and
a liquid B containing the curing agent.

9. A thermally conductive polymer obtained by curing the thermally conductive polymer composition according to any one of Claims 1 to 7, wherein
a terminal group of the thermally conductive polymer is -[(C₂H₄-O)ₘ-CₙH₂ₙ₊₁], m and n being any natural number.

10. A method for producing the thermally conductive polymer composition according to any one of claims 1 to 7, the method comprising at least:
a dispersing step of dispersing the tackifier in the plasticizer such that the plasticizer is free of a tackifier particle having a circular equivalent diameter of 10 µm or more; and
a dissolving step of dissolving the liquid rubber in the plasticizer having the tackifier dispersed therein.
